# EUROPEAN PATENT APPLICATION

(11) **EP 4 790 942 A1**
(43) Date of publication of application: **12.08.2026**
(21) Application number: 26155784.7
(22) Date of filing: 02.02.2026
(51) Int. Cl.: H04L 5/00

(54) **CARRIER AGGREGATION**

(30) Priority: 07.02.2025 GB 202501839
(71) Applicant: Nokia Technologies Oy, 02610 Espoo (FI)
(72) Inventor: KAZEMI, Parham, Espoo (FI); RYSGAARD, Bent Henneberg, Aalborg (DK); DALSGAARD, Lars, Oulu (FI)
(74) Representative: Nokia EPO representatives

(57) **Abstract**

Methods, apparatus and systems for carrier aggregation are disclosed.

## Description

### TECHNOLOGICAL FIELD

The present disclosure is related to but not limited to communication networks as defined by the 3GPP standard, such as the 5G and/or the 6G standard. The disclosure in particular relates to carrier aggregation, in particular carrier aggregation, CA, across component carriers in a same frequency band (sometimes referred to as fragmented intra-band CA).

### BACKGROUND

For radio transmissions (e.g., data and/or control transmissions) performed in a mobile network (e.g., uplink from a mobile device to a network node or downlink from a network node to a mobile device) one way of enhancing the radio channel (e.g., improving bandwidth and/or throughput) is to utilized multiple carriers in a single communication session. This concept is referred to as Carrier Aggregation. In Carrier Aggregation (CA), two or more Component Carriers (CCs) are aggregated, i.e., used jointly by a terminal device, e.g., a user equipment, UE. A UE may simultaneously receive and/or transmit on one or multiple CCs depending on its capabilities.

### SUMMARY OF SOME EXEMPLARY EMBODIMENTS

Carrier aggregation may for instance performed across multiple frequency bands (inter-band CA)(e.g., with one component carrier per frequency band) and/or using individual hardware resources of a UE for a respective component carrier. Radio frequency resources may in particular correspond to and/or comprise at least one antenna and associated processing circuitry such as a so called receiver transmission chain, Rx chain. An Rx chain may for instance comprise at least one analog filter, at least one oscillator, at least one digital filter and/or digital signal processing means such as circuitry for signal analysis such as for instance a (e.g., Fast) Fourier Transform, (F)FT and/or further components. The Rx chain of a UE may for instance be configured to operate on one frequency band and e.g., be limited to one frequency band (e.g., only).

It has been recognized that in today's communication networks, within a frequency band, there may exist fragmented frequency blocks (e.g., frequency intervals mutually separated), which may be termed fragmented intra-band frequency blocks. Such fragmented intra-band frequency blocks may be utilized by separate Rx chains, treating them as independent component carriers, analogously to inter-band CA yet on a single frequency band.

It has been recognized that fragmented intra-band blocks may be utilized in a particularly resource-efficient way when multiple intra-band component carriers on frequency blocks within a common frequency band may be processed using a common (e.g., single) Rx chain.

It has further been recognized that for a feasibility of using a single Rx chain on fragmented intra-band blocks (e.g., in downlink, DL, or uplink, UL, CA), issues such as a near-far problem (e.g., signal strength imbalances due to signal source positioning) and/or limited interference suppression capabilities of Rx chains and thus implications of unwanted and/or non-controllable transmissions will need to be accounted for.

It is thus inter alia one of the objects of the disclosed subject matter to enable a resource-efficient utilization of fragmented intra-band frequency blocks.

This object is to be achieved in particular taking into account one or more of the following aspects:
- A frequency band considered may in particular be a (e.g., single) downlink, DL, band, e.g., with a frequency span of at most 100 MHz, e.g., containing at least two non-contiguous CCs within a CA combination. Such a situation may in particular arise in a inter-operator co-located scenario (e.g., two or more operators using a common frequency band simultaneously and in an overlapping area)
- Power imbalances may complicate transmissions, for instance up to 6 dB DL power spectral density imbalance between two non-contiguous CCs in a single frequency band may exist.

According to a first example aspect, a method is proposed (e.g., performed and/or controlled by a mobile device, user equipment (UE)), comprising, by a terminal device:
- establishing a carrier aggregation (CA) communication session (e.g., uplink and/or downlink) with a network node, wherein the CA communication session comprises a first component carrier, CC, and a second CC (e.g., mutually non-contiguous) in a common frequency band (e.g., intra-band fragmented carrier aggregation) distanced from one another by a frequency gap, wherein the first CC and the second CC are utilized (e.g., by the terminal device) (e.g., used for transmitting and/or receiving data and/or control commands) using a (e.g., single) common radio frequency resource (e.g., of the terminal device) (e.g., antenna and/or RX/TX chain) (e.g., wherein a contiguous filter band comprises the first CC, the second CC and the frequency gap; e.g., wherein a center frequency of the common radio frequency resource is tuned to an average center frequency to accommodate both CCs),
- measuring, using the common radio frequency resource (e.g., based on a digital filtering, e.g., based on a (Fast) Fourier Transform, (F)FT, analysis), an interference level indication indicative of an intensity of an interference (e.g., received signal strength, e.g., absolute or relative, e.g., in relation to a signal strength received in at least one of the CCs (e.g., an average, maximum or minimum signal strength received across the CCs)) originating from (e.g., received on a frequency range) radio transmissions within the frequency gap, and
- determining, based on the measured interference level indication, to deactivate the second CC (e.g., and keep the first CC active) (e.g., and deactivating the second CC in case it is determined to deactivate the second CC).

According to a second example aspect, a method is proposed (e.g., performed and/or controlled by a mobile device, user equipment (UE)), comprising, by a terminal device:
- establishing a carrier aggregation (CA) communication session (e.g., uplink and/or downlink) with a network node, wherein the CA communication session comprises a first component carrier, CC, and a second CC (e.g., mutually non-contiguous) in a common frequency band (e.g., intra-band fragmented carrier aggregation) distanced from one another by a frequency gap, wherein the first CC and the second CC are utilized (e.g., by the terminal device) (e.g., used for transmitting and/or receiving data and/or control commands) using a (e.g., single) common radio frequency resource (e.g., of the terminal device) (e.g., antenna and/or RX/TX chain) (e.g., wherein a contiguous filter band comprises the first CC, the second CC and the frequency gap; e.g., wherein a center frequency of the common radio frequency resource is tuned to an average center frequency to accommodate both CCs),
- measuring, using the common radio frequency resource (e.g., based on a digital filtering, e.g., based on a (Fast) Fourier Transform, (F)FT, analysis), an interference level indication indicative of an intensity of interference (e.g., received signal strength, e.g., absolute or relative, e.g., in relation to a signal strength received in at least one of the CCs (e.g., an average, maximum or minimum signal strength received across the CCs)) originating from (e.g., received on a frequency range) radio transmissions within the frequency gap,
- determining, based on the measured interference level indication, to deactivate the second CC (e.g., and keep the first CC active),
- (e.g., one-sidedly) deactivating the second CC, wherein the deactivating comprises ceasing to utilize the second CC.

The method according to the first and/or second example aspect may for instance be performed and/or controlled by an apparatus, for instance a server. Alternatively, the method may be performed and/or controlled by more than one apparatus, for instance a server cloud comprising at least two servers. Alternatively, the method may for instance be performed and/or controlled by an electronic device, e.g. a node in a communication system and/or by a terminal device, e.g., a user equipment (UE). For instance, the method may be performed and/or controlled by using at least one processor of the electronic device.

According to a further example aspect, a computer program is disclosed, the computer program when executed by a processor causing an apparatus, for instance a server, a network node or a terminal device, e.g., a UE, to perform and/or control the actions of the method according to the first and/or second example aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., Only) Memory (ROM) or hard disk of a computer, or be intended for distribution of the program, like an optical disc.

According to a further example aspect, an apparatus is disclosed, configured to perform and/or control or comprising respective means for performing and/or controlling the method according to the first and/or second example aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

A terminal device, e.g., a user equipment (UE) may for instance correspond to a mobile device such as for example a mobile phone, tablet, smartwatch, a laptop, a Personal Digital Assistant (PDA) device, a wearable, an Internet-of-Things (IOT) device, an IIOT (Industrial IOT) device, a vehicle and/or combinations thereof. Such a user equipment may also be referred to as user device.

A network node may correspond to a component of a communication network such as for instance a Base Transceiver Station (BTS), a nodeB, an evolved node B (eNB), a Next Generation NodeB (gNB), a distributed unit (DU), a central unit (CU) and/or combinations thereof.

The method according to the first and/or second example aspect is in particular performed and/or controlled by a mobile device, e.g., a user equipment, UE.

The method comprises establishing a carrier aggregation (CA) communication session with a network node. The CA communication session may for instance be an uplink, UL, and/or a downlink, DL, communication session.

The CA communication session comprises a first component carrier, CC, and a second CC in a common frequency band. The CA communication session may thus be termed intra-band fragmented carrier aggregation communication session.

A given CC may be used for a particular cell, for instance, a Primary Cell, PCell, or a Secondary Cell, SCell. Thus, when disclosing a processing of the component carriers, this always also discloses a handling of cells which are carried by the respective CC.

The first and second CC are mutually non-contiguous and/or distanced from one another by a frequency gap. I.e., the first CC covers a first frequency interval (e.g., from frequency A to B) and the second CC covers a second frequency interval (e.g., from frequency C to D), wherein the two frequency intervals are nonoverlapping and distanced by a third frequency interval between the first and second frequency interval (e.g., C > D and/or C + x = D, with x>0). The third interval may be smaller or larger in frequency than at least one of or both of the first or second frequency interval.

The first CC and the second CC may be utilized using a (e.g., single) common (e.g., common for both the first and the second CC) radio frequency resource. The utilizing may for instance be performed and/or controlled by the terminal device. Utilizing may mean that the first and second CC are used for transmitting and/or receiving data and/or control signaling from and/or to a network node.

The radio frequency resource may belong to and/or be part of the terminal device performing and/or controlling the method according to the first and/or second example aspect. A radio frequency resource may for instance comprise and/or correspond to at least one antenna and/or a receiving, Rx, and/or a transmission, Tx, (e.g., analog and/or digital) chain.

The radio frequency resource may be configured to receive and/or transmit transmissions in a contiguous frequency band, e.g., formed by a filter of the radio frequency resource (e.g., by a digital filter of the radio frequency resource) (e.g., a single band of a band-pass filter in frequency, in particular not two separate bands for the respective CCs individually) which comprises at least the first CC, the second CC and the frequency gap. For instance, a center frequency of the (e.g., common) radio frequency resource is tuned to an average center frequency to accommodate both CCs. For instance, if the first CC extents from frequency A to B and the second CC extents from frequency C to D, a center frequency may be essentially (e.g., with a deviation of at most 5% or 10%) set to (A + D)/2.

The method according to the first and/or second example aspect further comprises measuring, using the common radio frequency resource, an interference level indication.

The interference level indication is indicative of an intensity of an interference originating from (e.g., received on a frequency range) radio transmissions within the frequency gap. For instance, the interference indication and/or intensity may correspond to and/or be quantified as a received signal strength, e.g., a received signal strength indication, RSSI. Additionally or alternatively, the interference indication and/or intensity may be quantified in absolute or in relative terms. For instance, a relative interference indication and/or intensity may be quantified in relation to a signal strength (e.g., RSSI) received in at least one of the CCs, in particular an average, maximum or minimum signal strength received across one of or both of the first and second CC.

It has been recognized that interference from a frequency gap between component carriers can be an important source of impairment for utilizing two CCs of a same frequency band in a CA communication session. The network node may not be able to control and/or measure transmissions in the frequency gap between carriers. It has been recognized that the terminal device may, in contrast to the network node, be capable of assessing the interference caused from in-gap transmissions and may be able to adjust to such interferences and/or even report such interferences to inform the network node.

The measuring may for instance be based on a digital filtering, e.g., based on a (Fast) Fourier Transform, (F)FT, analysis of received radio transmission signals. For instance, based on an FFT, received signal power in frequency bins corresponding to the frequency gap may be cumulated (e.g., summed up), thereby obtaining an indication of the interference level from within the frequency gap.

The method according to the first and/or second example aspect further comprises determining, based on the measured interference level indication, to deactivate the second CC. For instance, (e.g., only) the second CC is decided to be deactivated whereas the first CC is kept active, i.e., is not deactivated. The CA communication session may thus be stripped of one CC by deactivating the second CC. A deactivation may thus be seen as a fallback from a CA communication session with at least two CCs (the first and the second) to a CA communication session with one CC less (i.e., the second CC). A deactivation may for instance correspond to and/or comprise a ceasing of using the deactivated CC for communication (e.g., by the terminal device), a retuning of at least one frequency filter so that radio transmissions are no longer received and/or transmitted over the deactivated CC and/or requesting a deactivation of a CC from a network node.

In particular, the ordinal numbers first and second of the first and second CC merely serve the purpose of differentiating them (e.g., into a deactivated and a not-deactivated CC) and do not reflect any further qualities of the CCs.

According to the second example aspect, the method further comprises (e.g., one-sidedly) deactivating the second CC. Herein, the deactivating comprises ceasing to utilize the second CC. For instance, the terminal device may retune at least one frequency filter to no longer receive (e.g., measure) and/or transmit radio signals within a frequency range of the second CC. The terminal device may in particular perform the deactivating one-sidedly, i.e., in a manner uncoordinated with the network node. In particular, the terminal device may deactivate the second CC in a manner free of a corresponding indication of deactivation to the network node, i.e., without transmitting a deactivation information and/or deactivation request to the network node. Ceasing to utilize the second CC may still be noticeable by the network node, for instance because the terminal device ceases to transmit acknowledgements of DL transmission and/or UL transmissions.

According to an embodiment of the second example aspect, the deactivating is performed independently of (e.g., without) an informing the network node of the deactivating.

According to an embodiment of the first example aspect, it is proposed that the method further comprises deactivating the second CC (e.g., upon deciding to deactivate the second CC). Thus, the terminal device may perform the deactivating of the second CC in case it determines to deactivate the second CC. According to this embodiment of the first example aspect, the deactivating may involve a transmission of at least some indication of deactivation to the network node. For instance, the indication may comprise a request for deactivation and/or an indication of a deactivation cause. The deactivation may further comprise a ceasing of the utilization of the second CC as disclosed for the second example aspect.

According to an embodiment of the first and/or second example aspect, the radio transmissions within the frequency gap are at least one of:
- unusable for a communication session of the terminal device (e.g., with the network node) (e.g., because of a different operator), or
- at least partially non-orthogonally coded (e.g., and/or modulated) (e.g., in terms of orthogonal frequency-division multiplexing) with respect to radio transmissions of the terminal device.

The radio transmissions within the frequency gap may be unusable for a communication session of the terminal device (e.g., with the network node). For instance, the method according to all aspects may be performed in an operator co-located scenario by which different operators utilized parts (e.g., frequency blocks) of the same frequency band. The frequency band may for instance be fragmented into mutually separated (e.g., groups of) frequency blocks. In such a scenario, one operator may be able to provide a first and a second CCs which are separated in frequency by a frequency interval (frequency gap) in which at least one or more other operators operate. Thus, the operator providing the first and second CC may be unable to influence radio transmissions in the frequency gap, let alone schedule and/or control radio signals.

Additionally or alternatively, the radio transmissions within the frequency gap may be at least partially non-orthogonally coded (e.g., and/or modulated) with respect to radio transmissions of the terminal device, e.g., transmissions in the first and/or second CC. Orthogonality may in particular be understood in terms of an orthogonal frequency-division multiplexing, OFDM. Also here, for instance, the non-orthogonality may be caused by different operators using neighboring parts of a same component carrier. As operators do not coordinate their transmissions and instead code independently from one another, radio signals received from within the frequency gap as interference may be difficult to suppress and/or separate from the signals received in the first and/or second CC (e.g., other than blocking and/or suppressing the frequency interval of the frequency gap, e.g., by deactivating one of the CCs and adjusting a frequency filter to reject frequencies from within the frequency gap altogether, independently of coding).

According to an embodiment of the first and/or second example aspect, it is proposed that the method further comprises
- selecting the second CC to be deactivated at least partially based on determining that the second CC comprises (e.g., only) a (e.g., one or more) secondary component carrier, SCC, (e.g., and the second CC is devoid of a PCC and/or PSCC).

The selecting of a CC to be deactivated may be based on determining that the respective (here, the second) CC comprises (e.g., only) a secondary component carrier, SCC. When considering a single CC, determining that the CC comprises an SCC may imply that the CC is devoid of a PCC or PSCC. Thus, additionally or alternatively to determining that the second CC comprises a SCC, it may be determined that the second CC is devoid of a PCC and/or PSCC. Such determining may not necessarily imply that the first CC comprises a PCC and/or PSCC but instead, both the first and the second CC may comprise a respective SCC.

A PCC may for instance carry a PCell and/or a PCC carrying a PSCell (e.g., termed PSCC). In mutli-RAT dual connectivity, MR-DC, a terminal device may be configured with a primary cell group (PCG) and a secondary cell group (SCG). The PCG may include a primary cell (PCell) and one or more secondary cells (SCells) for communication between the UE and a first wireless network (e.g., a 5G wireless network). The PCell serves a primary component carrier (PCC) and the SCells serve one or more secondary component carriers (SCCs). In addition, the SCG may include a primary secondary cell (PSCell) and one or more SCells for communication between the terminal device and the (e.g., 5G) wireless network. The PSCell serves a primary secondary component carrier (PSCC) and the SCells serve one or more SCCs.

Determining that the second CC comprises an SCC may not be sufficient to determine to deactivate the CC. Properties of the first CC may play a role as well, as detailed in the following.

According to an embodiment of the first and/or second example aspect, selecting the second CC to be deactivated is based on determining that the first CC satisfies at least one of the following:
- comprises a primary component carrier, PCC,
- comprises a primary secondary component carrier, PSCC,
- (e.g., comprises (e.g., only) a (e.g., one or more) secondary component carrier, SCC, (e.g., and is devoid of a PCC and/or PSCC) and) covers a larger bandwidth compared to the (e.g., selected; e.g., to be deactivated) second CC (e.g., wherein the bandwidth is aggregated across multiple CCs neighboring and including the first CC, e.g., which can be kept active when deactivating the second CC),
- (e.g., comprises (e.g., only) a (e.g., one or more) secondary component carrier, SCC, (e.g., and is devoid of a PCC and/or PSCC) and) exhibits a higher throughput (e.g., data rate and/or bit rate) compared to the (e.g., selected; e.g., to be deactivated) second CC (e.g., wherein the throughput is aggregated across multiple CCs neighboring and including the first CC, e.g., which can be kept active when deactivating the second CC), or
- (e.g., comprises (e.g., only) a (e.g., one or more) secondary component carrier, SCC, (e.g., and is devoid of a PCC and/or PSCC) and) has a larger signal quality (e.g., signal to noise ratio, SNR, signal to interference plus noise ratio, SINR, or (e.g., received) signal strength, e.g., received signal strength indicator, RSSI) compared to the (e.g., selected; e.g., to be deactivated) second CC (e.g., wherein the signal quality is determined as an average, a minimum or a maximum across multiple CCs neighboring and including the first CC, e.g., which can be kept active when deactivating the second CC).

It may be determined to deactivate the second CC based on determining that the first CC comprises a primary component carrier, PCC and/or PSCC. Determining that the first CC comprises a PCC and/or PSCC may imply that the second CC comprises an SCC. For instance, it may be sufficient to determine that the first CC comprises a PCC and/or PSCC to determine that the second CC is to be deactivated. Additionally or alternatively, such determining (that the first CC comprises a PCC and/or PSCC) may be performed in addition to determining that the second CC comprises a secondary CC.

For instance, it may be sufficient to determine that the first CC comprises a PCC and/or PSCC in order to decide to deactivate the second CC, for instance irrespective and/or independent of whether the first CC is superior or inferior to the second CC in terms of, for instance, bandwidth, throughput and/or signal quality.

Additionally or alternatively, further criteria may be applied when for deactivating the second CC as follows. Such criteria may for instance be applied (e.g., only) when the first CC comprises (e.g., only) a secondary component carrier, SCC, and/or is devoid of a PCC and/or PSCC. In such a scenario, the first and the second CC may both comprise an SCC and/or both be devoid of a PCC and/or PSCC. For instance, only in this case (e.g., and not, when one CC carries a PCC and/or PSCC), the further criteria may be applied. I.e., preserving the PCC and/or PSCC by not deactivating a CC carrying the PCC and/or PSCC may take precedence over the further criteria such as bandwidth, throughput and/or signal quality.

The first CC may be determined to be activated based on it covering a larger bandwidth compared to the (e.g., selected; e.g., to be deactivated) second CC. For instance, the bandwidth may be a bandwidth individually achieved and/or provided by the first CC.

Additionally or alternatively, further CCs may be considered when assessing the achieved bandwidth, in particular CCs which are also involved in the CA communication session beyond the first and the second CC and which neighbor the first CC, in particular on the opposite side of the first CC with respect to the second CC. For instance, with increasing frequency, the CCs may be aligned as follows: second CC, first CC and third CC; neighboring one another. All three may be active during the CA communication session, e.g., using a single common radio frequency resource of the terminal device. When deactivating the second CC because of interference originating from a frequency gap between the second CC and the first CC, this may result in the UE not only shedding the first CC but also the third CC because the interference between the second CC and the first CC is also present between the second CC and the third CC. As a consequence, not only the bandwidth provided by the first CC is lost due to deactivation of the first CC but also the bandwidth of the third CC because it cannot be kept active either. When on the other hand deactivating the second CC, the interference between the first and the second CC can be avoided and the CA communication session can continue with the first CC and the third CC. It may thus be advantageous to consider a bandwidth that is aggregated across multiple CCs neighboring and including the first CC (e.g., in the example, the first and the third CC). Those may in particular be such CCs which can be kept active when deactivating the second CC.

Thus, bandwidth may be aggregated across multiple CCs neighboring and including the first CC when assessing the bandwidth of the first CC. In particular, such aggregation may be performed across those CCs of the CA communication session that may be kept active when deactivating the second CC.

Alternatively or additionally to bandwidth, throughput may be taken into account when considering deactivating the second CC. For instance, if the first CC has a higher throughput (e.g., data rate and/or bit rate) compared to the (e.g., selected; e.g., to be deactivated) second CC, the second CC may be determined to be deactivated.

Similar to bandwidth, throughput may be assessed for the second and/or first CC individually. Additionally or alternatively, the throughput may be aggregated across multiple CCs neighboring and including the first CC when assessing the throughput of the first CC. In particular, such aggregation may be performed across those CC of the CA communication session that may be kept active when deactivating the second CC.

Additionally or alternatively to bandwidth and throughput, signal quality may be assessed when determining whether to deactivate the second CC. For instance, the second CC may be determined to be deactivated if the first CC has a larger signal quality compared to the (e.g., selected; e.g., to be deactivated) second CC. Signal quality may for instance be assessed as a signal to noise ratio, SNR, signal to interference plus noise ratio, SINR, and/or (e.g., received) signal strength, e.g., a received signal strength indicator, RSSI.

The signal strength of the first CC may be assessed individually or across such CCs of the CA communication session which may be kept active after deactivating the second CC. For instance, a joint signal quality across such multiple CCs may be determined as an average, a minimum and/or a maximum across multiple CCs.

According to an embodiment of the first and/or second example aspect,
- the determining, based on the measured interference level indication, to deactivate the second CC comprises comparing the interference level indicated by the interference level indication (e.g., in absolute or relative terms, e.g., in relation to a (e.g., received) signal strength of at least one of the first or the second CC) to an interference level threshold (e.g., determining to deactivate the first CC when the indicated interference level exceeds the interference level threshold).

A criterion for evaluating whether a level of interference is acceptable or leads to a need to amend the CA communication session and deactivate a CC, in particular the second CC, may be based on a comparison to an interference level threshold. Such a threshold may be dynamic (e.g., variable in time). For instance, the threshold may depend on the (received) signal strength of at least one or both of the first and the second CC. Alternatively, the threshold may be static, e.g., fixed to a predefined (e.g., constant in time) value.

The threshold may be selected so that when exceeded, an in-gap interferer power has risen so high that a performance (e.g., error rate) of either of the first or the second CC is compromised.

According to an embodiment of the first and/or second example aspect, it is proposed that the method further comprises
- obtaining an indication of the interference level threshold from the network node (e.g., prior to establishing the communication session).

The interference level threshold may be pre-defined, e.g., within the terminal device. Additionally or alternatively, the interference level threshold may be obtained from the network node.

According to an embodiment of the first example aspect, deactivating the second CC comprises providing (e.g., transmitting) a deactivation request to the network node, wherein the deactivation request is at least indicative of the second CC (e.g., by means of an index of the CC).

The deactivation of the second CC may be performed in coordination with the network node and/or by requesting deactivation from the network node. The deactivating of the second CC may thus comprise providing (e.g., transmitting) a deactivation request to the network node. The deactivation request is at least indicative of the second CC. For instance, the deactivation request may contain an index to the second CC, e.g., according to a pre-defined and/or semi-statically indicated (e.g., by the network node) indexing of CCs.

By utilizing the deactivation request for deactivation, signaling errors due to misalignment between the network node and the terminal device may be avoided. Further, the network may be educated about causes of deactivation and may be enabled to better construct CA communication sessions (e.g., combine CCs) based on such insight.

The deactivation request may be indicative of at least two or more component carriers to be deactivated, for instance component carriers neighboring the second component carrier in frequency, e.g., on an opposite side of the first component carrier along a frequency axis. For instance, the indication of the second CC for deactivation may imply deactivation of neighboring CCs. Additionally or alternatively, the CCs to be deactivated may be (e.g., all) indicated in the deactivation request.

According to an embodiment of the first example aspect, the deactivation request comprises a cause indication indicative of in-gap interference as a cause of deactivating the second CC (e.g., indicating in-gap interference in general and/or an in-gap interference level and/or a particular in-gap interferer).

The deactivation request may comprise a cause indication for deactivating the second CC. For instance, the cause indication may be indicative of in-gap interference as a cause of deactivating the second CC. The cause indication may be of different degrees of detail. For instance, the cause indication may indicate in-gap interference in general as a cause for component carrier deactivation. Additionally or alternatively, the cause indication may indicate an in-gap interference level (e.g., spectral power density and/or signal strength, e.g., within the frequency gap) and/or a particular in-gap interferer (e.g., identified by frequency).

According to an embodiment of the first example aspect, the deactivation request is provided as at least one of
- a Medium Access Control Element, MAC CE, or
- a Radio Resource Control, RRC, signaling (e.g., user equipment, UE, assistance information).

The deactivation request may be transmitted to the network node by means of a Medium Access Control Element, MAC CE. It is thus proposed to utilize MAC CE for uplink signaling from terminal device to network node to indicate CC deactivation (e.g., by indicating a CC to be deactivated) and/or CC deactivation cause. MAC CE may typically rather be used as a signaling type in component carrier amendment for CC activation by the network node, i.e., as a downlink control signal. It has however been recognized that an uplink CC-related signaling for deactivation is possible as well and advantageous in enabling the terminal device to provide feedback about interference conditions not measurable by the network node.

Additionally or alternatively, an RRC signaling may be used for requesting deactivation of a CC. For instance, a (e.g., an additional) field (e.g., information element) within a UE assistance information may be used, e.g., for indication of a CC to be deactivated and/or for a cause of deactivation.

An indication of a CC to be deactivated may be transmitted by a first means (e.g., MAC CE or RRC signaling) and the indication of a cause for deactivation may be transmitted by a second means (e.g., MAC CE or RRC signaling). The first and second means may be identical. In this case, both deactivation (e.g., CC to be deactivated) and deactivation cause may be transmitted in a common signaling. Alternatively, first and second means may be different from one another. In this case, the deactivation (e.g., CC to be deactivated) and the deactivation cause may be transmitted simultaneously still or in separate, e.g., sequential signalings.

The method may further comprise obtaining (e.g., receiving) an RRC reconfiguration signaling from the network node. For instance, such RRC reconfiguration signaling may indicate at least one further (e.g., potential; e.g., activatable) CC.

According to an embodiment of the second example aspect, it is proposed that the method further comprises
- obtaining an RRC reconfiguration signaling (e.g., indicating at least one further (e.g., potential; e.g., activatable) CC) from the network node (e.g., in response to ceasing to utilize the CC).

According to this embodiment of the second example aspect, the RRC reconfiguration signaling may be obtained in response to a (e.g., one-sided, in particular terminal device sided) (e.g., network-node-independent) deactivation of the CC. For instance, the network node may notice that the terminal device is no longer reactive and/or transmits no more using the second CC. The network node may then conclude the CC has been deactivated and transmit an RRC reconfiguration signaling. Thus, in this variant, the UE does not need to explicitly signal a deactivation request but may indicate deactivation implicitly by stopping to use the second CC. The network node may react accordingly.

According to an embodiment of the first example aspect, it is proposed that the method further comprises
- obtaining an RRC reconfiguration signaling (e.g., indicating at least one further (e.g., potential; e.g., activatable) CC) from the network node in response to providing the deactivation request.

According to this embodiment of the first example aspect, the terminal device has sent (e.g., and the network has received) the deactivation request. The RRC reconfiguration signaling may thus be received in response to providing the deactivation request.

According to an embodiment of the first example aspect, it is proposed that the method further comprises
- retuning the common radio frequency resource to a center frequency of the first (e.g., the non-deactivated) CC (e.g., prior to or after deactivating the second CC).

According to an embodiment of the second example aspect, it is proposed that the method further comprises
- retuning the common radio frequency resource to a center frequency of the first (e.g., the non-deactivated) CC (e.g., wherein the retuning is part of and/or corresponds to the deactivating the second CC).

For instance, retuning the common radio frequency resource to a center frequency of the first (e.g., the non-deactivated) CC may be equivalent to and/or be a part of deactivating the second CC. Additionally or alternatively to retuning the center frequency, the method may comprise adjusting bounds of a bandpass filter to be limited to the frequency interval of the first CC and/or to exclude the frequency gap (e.g., and a frequency interval of the second CC).

The retuning may be performed prior to or after deactivating the second CC. Additionally or alternatively, the retuning is part of the deactivation and/or corresponds to the deactivating.

According to an embodiment of the first and/or second example aspect, it is proposed that the method further comprises providing (e.g., prior to establishing the communication session) a capability indication to the network node indicative of a support of at least one of
- a CA communication session comprising a first component carrier, CC, and a second CC (e.g., mutually non-contiguous) in a common frequency band (e.g., fragmented carrier CA communication session),
- measuring of at least one of
   - a signal quality of a component carrier in a fragmented carrier, or
   - an interference level of an interference originating from radio transmissions within a frequency gap between non-contiguous component carriers (e.g., such as the first and the second CC) in a fragmented carrier,
- requesting a deactivation of a component carrier,
- reporting at least one of
   - a cause (e.g., in-gap interference as a cause) of deactivating a component carrier, or
   - an indication of an interferer, or
- at least one filter capability for reducing an interference originating from radio transmissions within a frequency gap between (e.g., mutually non-contiguous) component carriers (e.g., adaptive image rejection).

The terminal device may indicate at least one capability to the network node regarding its capabilities to support carrier aggregation communication sessions. In particular, the terminal device may indicate that it is capable of establishing and/or handling a CA communication session in a fragmented intra-band CA communication session comprising at least two CCs in a common frequency band separated one from the other by a frequency gap.

The terminal device may additionally or alternatively inform the network about its capabilities to measure aspects of the CA communication session, in particular a signal quality of a component carrier in a fragmented carrier, or an interference level of an interference originating from within a frequency gap between non-contiguous component carriers (e.g., such as the first and the second CC) in a fragmented carrier.

The terminal device may additionally or alternatively report its capability of requesting a deactivation of a component carrier, e.g., by means of indicating a deactivation of one of more CCs.

The terminal device may additionally or alternatively report its capability of indicating a cause for deactivation and/or an indication of an interferer (e.g., frequency (-range) in which interferences were detected).

The terminal device may additionally or alternatively report at least one filter capability for reducing interference originating from within a frequency gap between (e.g., mutually non-contiguous) component carriers. Such capabilities may in particular comprise and/or correspond to an adaptive image rejection.

According to an embodiment of the first and/or second example aspect, the CA communication session comprises at least one further component carrier (e.g., in a same or a different band compared to the first and second CC) utilized using a second radio frequency resource (e.g., TX/RX chain). The method may thus be described in terms of two CCs and one radio frequency resource. Yet, the communication session of the terminal device and the network node is not limited to these specified CCs.

According to a fourth example aspect, a method is proposed (e.g., performed and/or controlled by a network node), comprising, by a network node:
- establishing a carrier aggregation (CA) communication session (e.g., uplink and/or downlink) with a terminal device (e.g., according to the first example aspect), wherein the CA communication session comprises a first component carrier, CC, and a second CC (e.g., mutually non-contiguous) in a common frequency band (e.g., intra-band fragmented carrier aggregation) distanced from one another by a frequency gap (, wherein the first CC and the second CC are utilized (e.g., by the terminal device) (e.g., used for transmitting and/or receiving data and/or control commands) using a (e.g., single) common radio frequency resource (e.g., of the terminal device) (e.g., antenna and/or RX/TX chain) (e.g., wherein a contiguous filter band comprises the first CC, the second CC and the frequency gap; e.g., wherein a center frequency of the common radio frequency resource is tuned to an average center frequency to accommodate both CCs)), and
- obtaining (e.g., receiving) a deactivation request from the terminal device, wherein the deactivation request is at least indicative of the second CC (e.g., by means of an index of the CC).

According to a fourth example aspect, a method is proposed (e.g., performed and/or controlled by a network node), comprising, by a network node:
- establishing a carrier aggregation (CA) communication session (e.g., uplink and/or downlink) with a terminal device (e.g., according to the first example aspect), wherein the CA communication session comprises a first component carrier, CC, and a second CC (e.g., mutually non-contiguous) in a common frequency band (e.g., intra-band fragmented carrier aggregation) distanced from one another by a frequency gap (, wherein the first CC and the second CC are utilized (e.g., by the terminal device) (e.g., used for transmitting and/or receiving data and/or control commands) using a (e.g., single) common radio frequency resource (e.g., of the terminal device) (e.g., antenna and/or RX/TX chain) (e.g., wherein a contiguous filter band comprises the first CC, the second CC and the frequency gap; e.g., wherein a center frequency of the common radio frequency resource is tuned to an average center frequency to accommodate both CCs)).

The method according to the third and/or fourth example aspect may for instance be performed and/or controlled by an apparatus, for instance a server. Alternatively, the method may be performed and/or controlled by more than one apparatus, for instance a server cloud comprising at least two servers. Alternatively, the method may for instance be performed and/or controlled by an electronic device, e.g. a node in a communication system and/or by a terminal device, e.g., a user equipment (UE). For instance, the method may be performed and/or controlled by using at least one processor of the electronic device.

According to a further example aspect, a computer program is disclosed, the computer program when executed by a processor causing an apparatus, for instance a server, a network node or a terminal device, e.g., a UE, to perform and/or control the actions of the method according to the third and/or fourth example aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., Only) Memory (ROM) or hard disk of a computer, or be intended for distribution of the program, like an optical disc.

According to a further example aspect, an apparatus is disclosed, configured to perform and/or control or comprising respective means for performing and/or controlling the method according to the third and/or fourth example aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

Features disclosed with respect to the first and/or second aspect are herewith disclosed for the third and fourth aspect as well, where applicable.

The deactivation request may be indicative of at least two or more component carriers to be deactivated, for instance component carriers neighboring the second component carrier in frequency, e.g., on an opposite side of the first component carrier. For instance, the indication of the second CC for deactivation may imply deactivation of neighboring CCs. The network node may be configured to deactivate (e.g., all) neighbors of a CC to be deactivated according to the deactivation request which are located on a side of the to be deactivated CC which is facing away from the first CC.

According to an embodiment of the third example aspect, the deactivation request comprises a cause indication indicative of in-gap interference as a cause of deactivating the second CC (e.g., indicating in-gap interference in general and/or an in-gap interference level and/or a particular in-gap interferer).

According to an embodiment of the third example aspect, the deactivation request is obtained as at least one of
- a Medium Access Control Element, MAC CE, or
- a Radio Resource Control, RRC, signaling (e.g., user equipment, UE, assistance information).

According to an embodiment of the third example aspect, it is proposed that the method further comprises
- providing an RRC reconfiguration signaling (e.g., indicating at least one further (e.g., potential; e.g., activatable) CC) to the terminal device in response to providing the deactivation request.

According to an embodiment of the third and/or fourth example aspect, the radio transmissions within the frequency gap are at least one of:
- unusable for a communication session with the terminal device (e.g., because of a different operator), or
- at least partially non-orthogonally coded (e.g., and/or modulated) (e.g., in terms of orthogonal frequency-division multiplexing) with respect to radio transmissions of the terminal device (e.g., and of the network node in the (e.g., and or any) communication session with the terminal device).

According to an embodiment of the third and/or fourth example aspect, it is proposed that the method further comprises providing an indication of the interference level threshold to the terminal device (e.g., prior to establishing the communication session).

According to an embodiment of the fourth example aspect, it is proposed that the method further comprises
- providing an RRC reconfiguration signaling (e.g., indicating at least one further (e.g., potential; e.g., activatable) CC) to the terminal device (e.g., in response to observing a ceasing of utilization of the second CC by the terminal device).

The network node may for instance observe that the terminal device no longer responds to downlink, DL, signalings on a given CC and may thus conclude that the terminal device has ceased using the CC.

According to an embodiment of the third and/or fourth example aspect, it is proposed that the method further comprises obtaining (e.g., prior to establishing the communication session) a capability indication from the terminal device indicative of a support of at least one of
- a CA communication session comprising a first component carrier, CC, and a second CC (e.g., mutually non-contiguous) in a common frequency band (e.g., fragmented carrier CA communication session),
- measuring of at least one of
   - a signal quality of a component carrier in a fragmented carrier, or
   - an interference level of an interference originating from radio transmissions within a frequency gap between non-contiguous component carriers (e.g., such as the first and the second CC) in a fragmented carrier,
- requesting a deactivation of a component carrier,
- reporting at least one of
   - a cause (e.g., in-gap interference as a cause) of deactivating a component carrier, or
   - an indication of an interferer, or
- at least one filter capability for reducing an interference originating from radio transmissions within a frequency gap between (e.g., mutually non-contiguous) component carriers (e.g., adaptive image rejection).

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic visualization of a communication system to embodiments of all example aspects;
- Fig. 2a-c: a schematic visualization of a fragmented frequency band according to embodiments of all example aspects;
- Fig. 3: a schematic diagram of a radio frequency resource according to embodiments of all example aspects;
- Fig. 4: a schematic visualization of a fragmented CA communication session spanning four component carriers according to embodiments of all example aspects;
- Fig. 5a-d: a schematic visualization of a fragmented intra-band CA communication session spanning two component carriers according to embodiments of all example aspects;
- Fig. 6: a schematic signaling diagram of a method according to embodiments of all example aspects;
- Fig. 7: a flowchart showing an example embodiment of a method according to the first and second example aspect;
- Fig. 8: a flowchart showing an example embodiment of a method according to the third and fourth example aspect;
- Fig. 9: a schematic block diagram of an apparatus configured to perform the method according to the first and/or second example aspect;
- Fig. 10: a schematic block diagram of an apparatus configured to perform the method according to the third and/or fourth example aspect; and
- Fig. 11: a schematic illustration of examples of tangible and non-tangible storage media according to all example aspects.

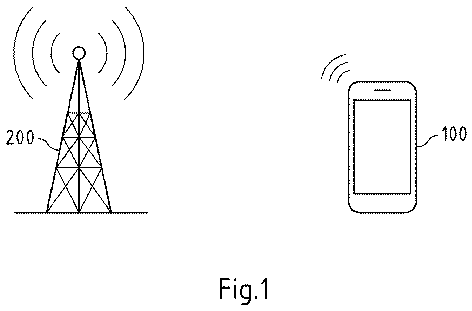

Fig. 1 demonstrates a simplified communication system, in which methods according to all aspects may be performed. The system comprises a mobile device 100 which may for instance be configured to control and/or perform the method according to the first and/or the second example aspect. The system further comprises a network node 200 which may for instance be configured to control and/or perform the method according to the third and/or fourth example aspect.

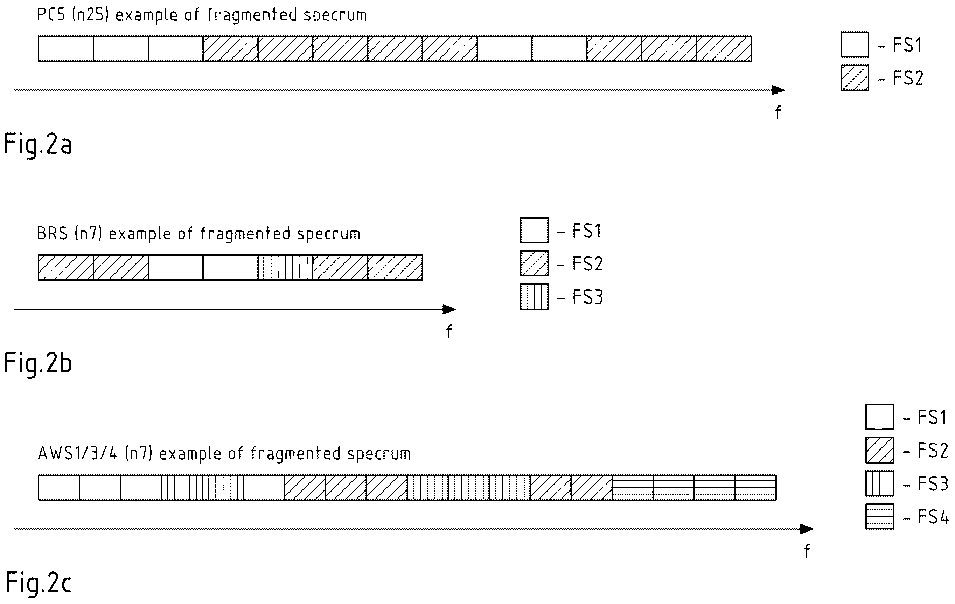

Fig. 2a-c show differently fragmented frequency bands in frequency. The frequency bands are structured into frequency blocks. Frequency blocks a the same shaded are operated by a same operator (e.g., of which one utilizes a network node controlling and/or performing a method according to the third and/or fourth example aspect). As can be seen there are two or more different operators using mutually different parts of the same frequency band. It may then happen that one operator schedules an intra-band fragmented CA communication session for a terminal device (e.g., controlling and/or performing a method according to the first and/or second example aspect) utilizing two parts of the frequency band which are separated from one another by a frequency gap of at least one frequency block controlled by another operator.

Transmission within this frequency gap may not be coordinated with transmissions in the component carriers and are thus interfering with CA communication session.

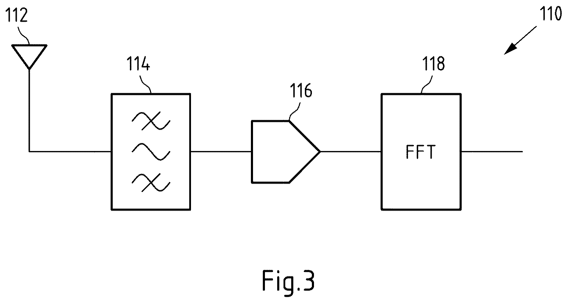

Fig. 3 shows a simplified radio frequency resource comprising. For instance, a terminal device controlling and/or performing a method according to the first and/or second example aspect may use a radio frequency resource like the one shown in Fig. 3 in a CA communication session comprising two CCs as the common radio frequency resource.

The radio frequency resource comprises an antenna 112, an analog filter 114 (e.g., tuned to a frequency band), a digital-to-analog converter, DAC, 116 and analysis circuitry such as a Fast Fourier Transform circuit 118. Further components may be provided.

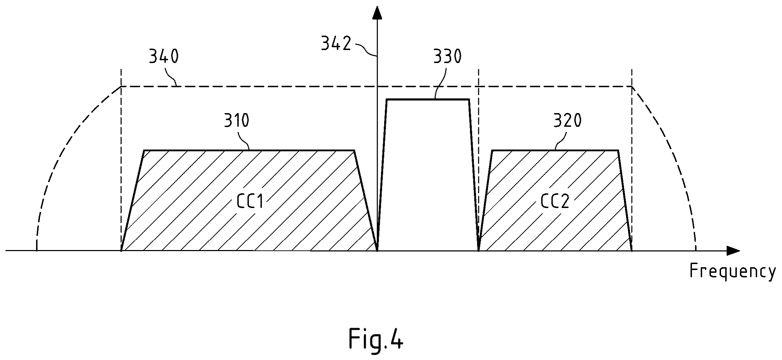

Fig. 4 shows a fragmented intra-band CA communication session in frequency. As can be seen there is a first component carrier 310 (CC1), a second component carrier 320 (CC2) and a frequency gap 330 in which an interference signal is present. A terminal device (e.g., according to the first and/or second aspect may tune at least one of its filters (e.g., a digital filter) with a center frequency 342 to be receptive for a frequency range encompassing CC1 310, CC2 320 and the frequency gap 330.

The interference from the frequency gap 330 can become excessive and overshadow signals in component carriers 310, 320. The terminal device can selectively measure the level of interference (e.g., by applying FFT analysis, e.g., by using a module such as the one shown in Fig. 3). The terminal device may then determine to drop (deactivate) one of the component carriers, e.g., depending on whether it carries a secondary component carrier, a primary component carrier and/or based on performance such as for instance bandwidth, throughput and/or signal quality of the first CC 310 and/or the second CC 320.

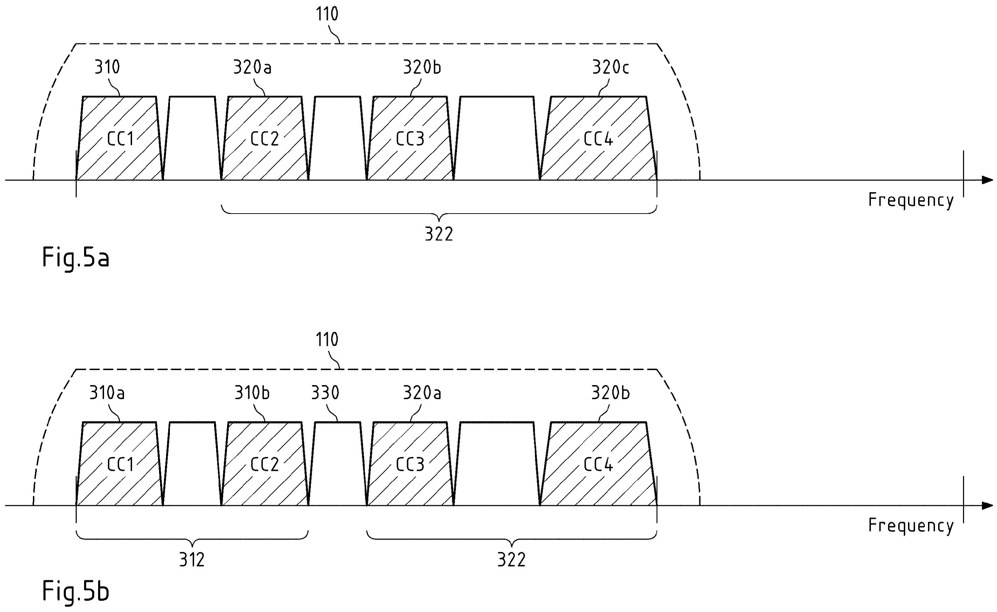

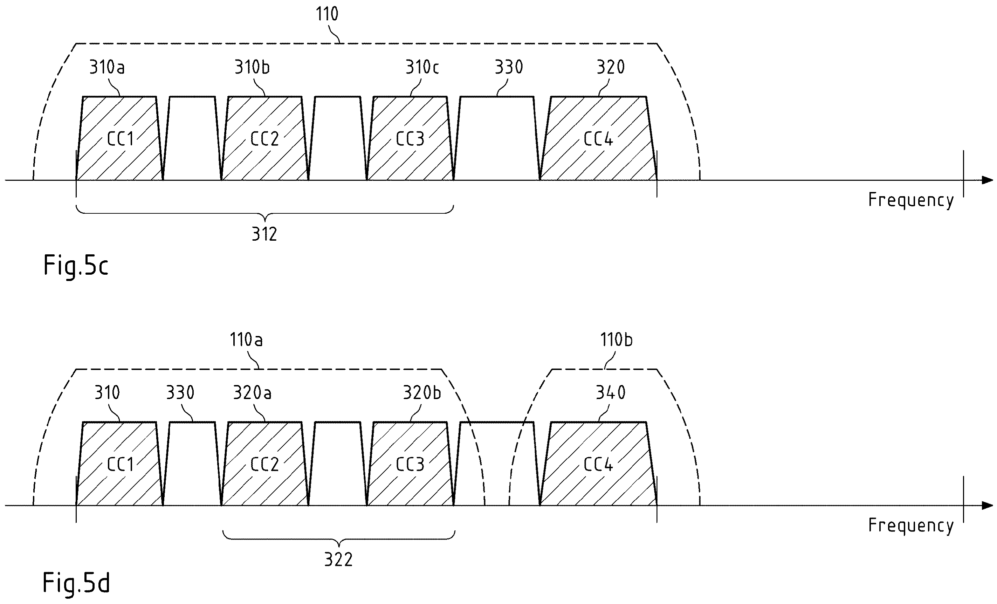

Fig. 5a-d show situations in which more than two (three or four) component carriers within a same frequency band are used in a CA communication session, with either a single radio frequency resource (Fig. 5a-c) or two radio frequency resources (Fig. 5d).

In Fig. 5a-c, a terminal device (e.g., according to the first and/or second aspect) is tuned with a frequency interval 110 to receive all CCs 310, 320a, 320b, 320c with one radio frequency resource. In Fig. 5b, the terminal device (e.g., according to the first and/or second aspect) receives CCs 310, 320a, 320b using one radio frequency resource tuned to frequency filter 110a and CC4 320c with a second radio frequency resource tuned to be responsive to the frequency interval 110b.

Turning to Fig 5a, a first CC 310 is again separated from the second component carrier 320a by a frequency gap 330 from which interference is originating. One of the first CC 310 or the second CC 320a has to be deactivated to continue with the CA communication session and eliminate the interference from within the frequency gap 330. When deciding whether to deactivate the first CC 310 or the second CC 320a, this decision may involve assessing not only the first CC 310 and the second CC 320a but also neighboring CCs 320b, 320c (group 322) of the (here) second CC 320a. As can be seen, CC1 310 has no neighbors except the second CC 320a. Yet, the second CC 320a has two neighbors 320b and 320c. Deactivating the second CC 320a (i.e., keeping the first CC 310 active) would mean that also CC 320b and CC 320c would have to be deactivated. In order to assess whether this is the best option, for instance, it may be determined whether any of the CCs carries a Primary CC (e.g. PCell or PSCell) and if so, preserve (i.e., not deactivate it or any member of the group of CCs of which one carries the PCC and/or PSCC). In case all CCs are Secondary CCs, further criteria such as for instance a joint bandwidth, joint throughput and/or joint signal quality of CC2 320a, CC3 320b and CC4 320c is assessed and compared to the respective value achieved by the first CC1 310. Based on which performs better, CC1 310 or the combination of CC2 320a, CC3 320b and CC4 320c, CC1 310 (if it by itself outperforms the combination of CC2 320a, CC3 320b and CC4 320c) or CC2 320 (if it in combination with CC3 320b and CC4 320c outperforms CC1 310) (and, consequently, deactivate with it also CC3 320b and CC4 320c) are deactivated.

Fig. 5b shows a similar scenario wherein the interferer is transmitting signals in frequency gap 330 between the first CC2 310b and the second CC3 320a. Again, the group 312 of first CC 310b and neighbor 310a and second group 322 of second CC 320a and neighbor 320b are evaluated in order to decide whether to deactivate the first CC 310b or the second CC 320a. It may again be evaluated whether one of the CCs comprises a PCC and/or PSCC and if so, deactivate the respective other group of CCs. E.g., if CC4 carries the PCC and/or PSCC, CC1 310a and CC2 310b are deactivated, in particular regardless of further criteria such as bandwidth, throughput and/or signal quality of any individual CC and/or of a group of CCs 312, 322.

Fig. 5c is a mirrored case of Fig. 5a in which a single second CC 320 and three grouped CCs 310a, 310b, 310c (e.g., grouped by the position of the interferer 330 in frequency between CC4 320 and CC3 310c).

Fig. 5d covers a case in which one CC4 340 is received by means of a separate radio frequency resource (e.g., Rx chain) and thus can stay active even in case interference is originating from the frequency gap to CC3 320b. The three CCs 310, 320a, 320b are treated analogously to the four CCs in Fig. 5a-c. For instance, if an interferer causes too much interference between CC3 and CC4, CC4 may be dropped (given it does not carry a PCC and/or PSCC and/or is inferior to CC3 (e.g., in combination with CC1 and CC2)). If the UE 100 has another radio frequency resource at its disposal, it may individually tune this another radio frequency resource to CC3 and continue using it without being affected by the interferer.

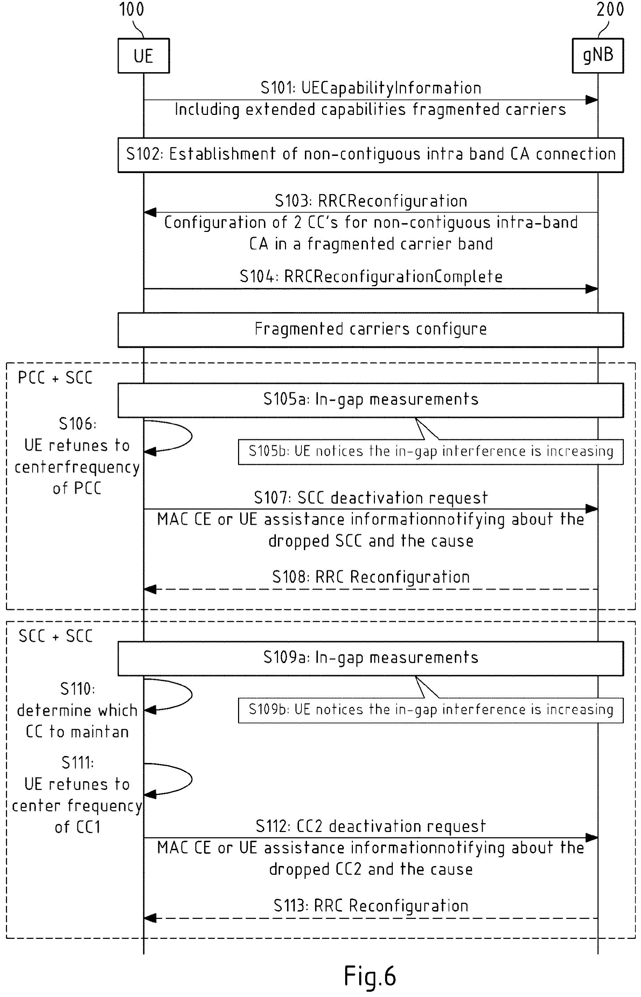

Fig. 6 shows a signaling diagram between a terminal 100 (e.g., according to the first and/or second aspect) and a network node 200 (e.g., according to the third and/or fourth aspect).

As will be seem in more detail in the following, a new UE assistance information may be dedicated to a cause for dropping one or more CCs from a fragmented CA communication session (e.g., of a carrier pair). This may enable the network can deactivate the corresponding CCs (e.g., Cell(s)). It may further be beneficial to the network node 200 if has knowledge about which in-gap interferer caused the failure so that it is enabled to update a next carrier aggregation communication session (e.g., CC pairs) and/or Mobile Originated, MOs.

When the terminal device 100 (UE) notifies the network node 200 through UE assistance information and/or MAC CE about the cause of dropping one of the CCs, the network node 200 can deactivate the corresponding CC (e.g., an SCell). The network node 200 may further reconfigure the UE 100 with new Mobile Originated, MO, and/or establish a CA communication session based on knowledge on which in-gap interferer caused a previous CA failure.

In a step S101, when reporting UE capabilities (see e.g. TS 38.306), the UE 100 may for instance report at least one measurement capability for fragmented carriers. E.g., the UE capabilities to measure fragmented component carriers, sub-BW of fragmented component carriers, in-gap interference, and at least one or more types of measurement for at least one or a subset of or all of the above. Optionally, the UE can report a support of adaptive image rejection.

In a step S102, the UE 100 may establish a CA communication session with a non-contiguous intra-band component carrier pair, also called a fragmented carrier.

In a step S103, a RRC reconfiguration sets up the fragmented carrier pair. Furthermore, the setup may include at least one or more measurement setups within the capabilities reported by the UE during registration in step S101. Also, the network node 200 may indicate a threshold (e.g., tolerance) of the in-gap interference.

In a step S104, the configuration is confirmed by an RRC Reconfiguration Complete message.

In a first scenario spanning steps S105a to S108, the at least two component carriers comprise one with carries a Primary CC (PCC and/or PSCC) and one which carries a Secondary CC. The scenario may be identified by the expression PCC + SCC. The CA thus comprises a PCell and an SCell, e.g., which is added to the PCC and/or PSCC.

If the UE 100 is configured with CC1 as the PCell and CC2 as the SCell, and experiences high in-gap interference levels, the UE may be configured to void compromising the PCC and/or PSCC signal quality. Thus, the UE 100 may be configured to drop (e.g., deactivate) SCC utilization and/or measurements. The UE 100 may fall back to a single carrier utilization and/or measurements, e.g., on CC1. The UE may notify the network to deactivate SCell on the CC2. In more detail:
In a step S105a, the UE starts performing measurements on the CCs and the in-gap, for instance regularly.

In step 105b, based on the measurements, the UE 100 realizes the in-gap interference is increased. The UE 100 may further determine that the level of interference surpassed a tolerable threshold, e.g., by comparing it to an interference threshold.

In a step S106, the UE 100 may change a center frequency of the demodulation back to where the PCC and/or PSCC is so that the influence of the interference is attenuated and the UE 100 is enabled to maintain a sufficient signal quality on PCC and/or PSCC. The UE 100 thus tries to keep demodulation of PCC and/or PSCC intact.

In a step S107, the UE 100 (e.g., according to the second example aspect) may request a CC (e.g., SCell) deactivation by transmitting a deactivation request to the network node 200, for instance through either a MAC CE and/or an RRC signaling such as a UE assistance information. In the deactivation request, the UE 100 may include an indication of the deactivated CC and/or the deactivated CCs. The UE 100 may further include a cause for deactivation which in this case is in-gap interference.

In a step S108, the network node 200 may transmit a (e.g., new) RRC reconfiguration signaling to the UE 100. This RRC reconfiguration signaling may indicate a new CA communication session (e.g., comprise a new configuration for a CA communication session; e.g., indicating a deviating CC at least for the PCell and optionally for a new SCell) or may alternatively keep the same CC for the PCell.

In a second scenario spanning steps S109a to S113, the at least two component carriers comprise both respectively carry a Secondary CC. The scenario may be identified by the expression SCC + SCC. The CA thus comprises an aggregated first SCell and second SCell, e.g., with a PCC and/or PSCC covered by a different carrier.

If the UE 100 is configured with CC1 and CC2 as SCells (i.e., both), and experiences high in-gap interference levels, the UE 100 may continue measuring one of the CCs based on the UE's 100 preference. The UE 100 can for instance decide about which CC to keep for further connection. E.g., a CC of the two CCs with larger bandwidth, larger throughput and/or larger signal quality (e.g., considered in combination with its neighboring CCs) may be kept active ant the other, inferior one, may be deactivated. The performance may be evaluated based on historical performance of the individual CCs, e.g., up to a point in time where the determining of dropping one CC is performed. The UE 100 may notify the network 200 to deactivate one of the CCs and keeping the SCell on the other CC active.

In a step S109a, The UE starts performing measurements on the CCs and the in-gap, for instance regularly.

In step 109b, based on the measurements, the UE 100 realizes the in-gap interference is increased. The UE 100 may further determine that the level of interference surpassed a tolerable threshold, e.g., by comparing it to an interference threshold.

In step S110, e.g., based on the previous records (statistics), the UE determines which of the first and second CC is providing better throughput, has wider bandwidth and/or better signal quality. The better performing CC may be maintained for connection. E.g., CC1 is chosen for keeping the connection and CC2 is dropped.

In step S111, the terminal device 100 changes the center frequency of the demodulation back to where the chosen CC is so that the UE 100 maintains a signal quality on one of the CCs (CC1) from previous step. It tries to keep demodulation of the non-deactivated CC (e.g., CC1) intact.

In step S112, The UE 100 (e.g., according to the second example aspect) requests SCell deactivation through either a MAC CE or UE assistance information messaging. In the message, the UE includes the deactivated CC/CCs (CC2) and the cause for deactivation which is in-gap interference.

In step S112, the network node 200 will send a new RRC Reconfiguration to the UE, proposing new SCell or keep the CC1 as it is. For instance, such signaling may be based on (e.g., in response to) obtaining the deactivation request from the UE 100. This option may for instance be adopted for the method according to the first and/or third aspect. For instance, such signaling may alternatively be based on a determining, by the network node 200, that the UE 100 has deactivated (e.g., has ceased utilizing) a respective CC, in in particular without and/or independent of a deactivation request received at the network node 200. This option may for instance be adopted for the method according to the second and/or fourth aspect.

The UE 100 may thus measure CC1 and CC2 (e.g., and in-gap interferences) as shown in Figure 4. Due to increased in-gap interference, the UE 100 may determine that it has to to fall back to a single CC utilization and/or measurements. In this regard, the UE 100 may choose a more important CC, e.g., more important for measurements and/or communication. Such decision whether to deactivate one of the CCs may be based on whether a CC carries a PCC and/or PSCC or a SCC. Here, the PCC and/or PSCC may be kept active and the SCC may be deactivated. In a case where both the CCs carry an SCC, the UE 100 may use other options described in section above (e.g., select by bandwidth, throughput and/or signal quality; e.g., while considering neighboring CCs).

After choosing one CC for the measurements the UE 100 may notify the network node 200 about the discontinued CC measurements and the cause of that. Alternatively, the UE 100 may simply deactivate the CC without notifying the network node 200. There are several options for notifying the network node 200. The following embodiments apply to all aspects, in particular to the first and/or third aspect.

In a first option, the UE 100 may transmit an information element, IE, (e.g., termed Frag-Carr-Dropped-CCs) in the UE assistance information which describes (e.g., indicates) a CC and/or multiple CCs that are not being measured (e.g., not utilized for communication, in particular for DL reception)(e.g., anymore) in a fragmented carrier pair. The UE 100 may in a same UE assistance information indicate that such discontinuation of utilizing and/or measuring the CC may be due to high (e.g., above-threshold) in-gap interference. The UE 100 may further indication information (e.g., an identification and/or frequency information) of the in-gap interferer.

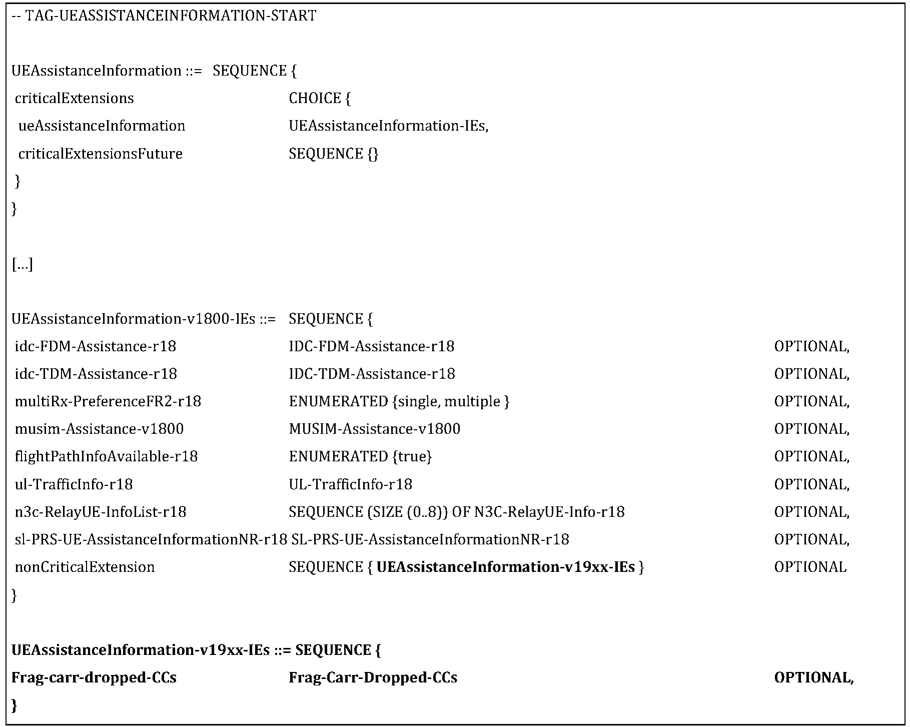

In the above example. in the IE UEAssistanceInformation-v1800-IEs, the field nonCriticalExtension has been populated with a new sequence UEAssistanceInformation-v19xx-IEs. Within UEAssistanceInformation-v19xx-IEs, the IE Frag-carr-dropped-CCs is included and thus allows to identify the deactivated CC and/or CCs. Frag-Carr-Dropped-CCs.

As a second option of indicating deactivated CCs, a MAC CE may be used. The MAC CE may be similar to an SCell Activation and/or Deactivation as provided by the network node 200 to the UE 100. Yet, in this case, the UE 100 provides the MAC CE to network. In the MAC CE, at least or exactly one octet is added. The added octet describes a cause for dropping at least one or more CCs from a fragmented carrier pair (e.g., a CA communication session) for measurements (e.g., and communication) and also the indices of those CCs.

**Table 1: SCell Deactivation MAC CE of five octets**

| | | | | | | | | |
|---|---|---|---|---|---|---|---|---|
| C₇ | C₆ | C₆ | C₄ | C₃ | C₂ | C₁ | R | Oct 1 |
| C₁₅ | C₁₄ | C₁₃ | C₁₂ | C₁₁ | C₁₀ | C₉ | C₈ | Oct 2 |
| C23 | C₂₂ | C₂₁ | C₂₀ | C₁₉ | C₁₈ | C₁₇ | C₁₆ | Oct 3 |
| C31 | C₃₀ | C₂₉ | C₂₈ | C₂₇ | C₂₆ | C₂₅ | C₂₄ | Oct 4 |
| x₁ | x₂ | x₃ | x₄ | x₅ | x₆ | x₇ | x₈ | Oct 5 |

Table 1 shows an SCell Deactivation MAC CE. The MAC CE may have a fixed (e.g., or variable) size and comprises five octets containing 31 C-fields and one R-field and 8 X-fields.

The C-fields indicated activation and/or deactivation of a particular cell, in particular SCell. If there is an SCell configured for a MAC entity (e.g., UE 100) with an SCellIndex i (e.g, as specified in TS 38.331), the field Cᵢ may indicate an activation and/or deactivation status of the SCell with SCellIndex i. Otherwise, the MAC entity shall ignore the Cᵢ field. The Cᵢ field is set to 1 to indicate that the SCell with SCellIndex i shall be activated. The Cᵢ field is set to 0 to indicate that the SCell with SCellIndex i shall be deactivated. The R-field carries a reserved bit. It may be set to 0.

The X-fields, Xᵢ, are reserved for indicating a cause of a SCell deactivation and/or further in-gap details such as an interferer identity and/or quality.

According to a third option, a MAC CE message may be utilized by the UE 100. The MAC CE may be utilized as a reverse deactivation request in which the UE 100 request the activation and/or deactivation of specific CCs due to high in-gap interference, for instance after those CC(s) have been and/or are being activated as SCell(s). The MAC CE may contains an index of one of more deactivated CCs. The MAC CE may further carry in-gap interferer information.

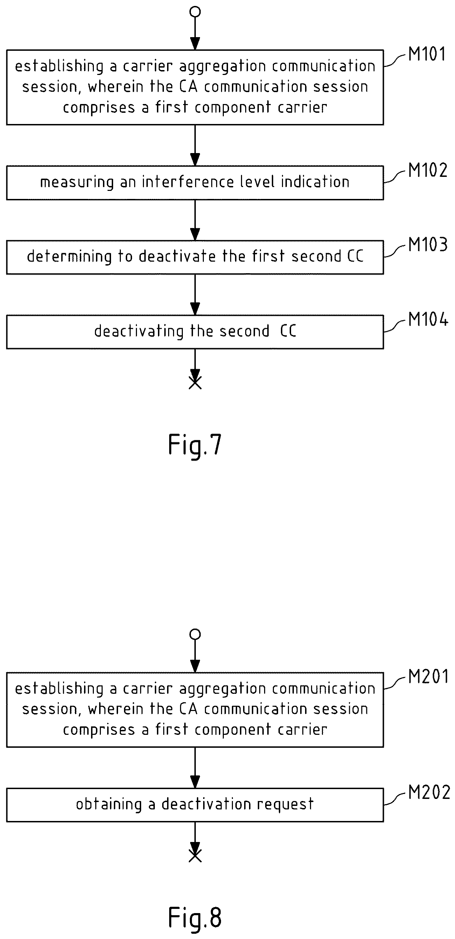

Fig. 7 shows a flowchart of an example embodiment according to the first and/or second example aspect, e.g., performed and/or controlled by a terminal device 100.

In a step M101, the method comprises establishing a carrier aggregation (CA) communication session (e.g., uplink and/or downlink) with a network node, wherein the CA communication session comprises a first component carrier, CC, and a second CC (e.g., mutually non-contiguous) in a common frequency band (e.g., intra-band fragmented carrier aggregation) distanced from one another by a frequency gap, wherein the first CC and the second CC are utilized (e.g., by the terminal device)(e.g., used for transmitting and/or receiving data and/or control commands) using a (e.g., single) common radio frequency resource (e.g., of the terminal device) (e.g., antenna and/or RX/TX chain)(e.g., wherein a contiguous filter band comprises the first CC, the second CC and the frequency gap; e.g., wherein a center frequency of the common radio frequency resource is tuned to an average center frequency to accommodate both CCs).

In a step M102, the method comprises measuring, using the common radio frequency resource (e.g., based on a digital filtering, e.g., based on a (Fast) Fourier Transform, (F)FT, analysis), an interference level indication indicative of an intensity of interference (e.g., received signal strength, e.g., absolute or relative, e.g., in relation to a signal strength received in at least one of the CCs (e.g., an average, maximum or minimum signal strength received across the CCs)) originating from (e.g., received on a frequency range) radio transmissions within the frequency gap.

In a step M103, the method comprises determining, based on the measured interference level indication, to deactivate the second CC (e.g., and keep the first CC active) (e.g., and deactivating the second CC in case it is determined to deactivate the second CC).

In a step M104, the method may further comprise, (e.g., one-sidedly) deactivating the second CC. The deactivating may for instance comprise ceasing to utilize the second CC. The deactivating may additionally or alternatively, comprise transmitting a deactivation request to the network node.

Fig. 8 shows a flowchart of an example embodiment according to the third and/or fourth example aspect, e.g., performed and/or controlled by a network node 200.

In a step M201, the method comprises establishing a carrier aggregation (CA) communication session (e.g., uplink and/or downlink) with a terminal device (e.g., according to the first example aspect), wherein the CA communication session comprises a first component carrier, CC, and a second CC (e.g., mutually non-contiguous) in a common frequency band (e.g., intra-band fragmented carrier aggregation) distanced from one another by a frequency gap (, wherein the first CC and the second CC are utilized (e.g., by the terminal device) (e.g., used for transmitting and/or receiving data and/or control commands) using a (e.g., single) common radio frequency resource (e.g., of the terminal device) (e.g., antenna and/or RX/TX chain)(e.g., wherein a contiguous filter band comprises the first CC, the second CC and the frequency gap; e.g., wherein a center frequency of the common radio frequency resource is tuned to an average center frequency to accommodate both CCs)).

In a step M202, the method comprises obtaining (e.g., receiving) a deactivation request from the terminal device, wherein the deactivation request is at least indicative of the second CC (e.g., by means of an index of the CC)

The method may for instance further comprise (not shown) a determining that the terminal device has ceased utilizing and/or measuring a CC (e.g., the second CC) and/or a receiving, from the terminal device, of a deactivation request indicating at least one CC (e.g., the second CC).

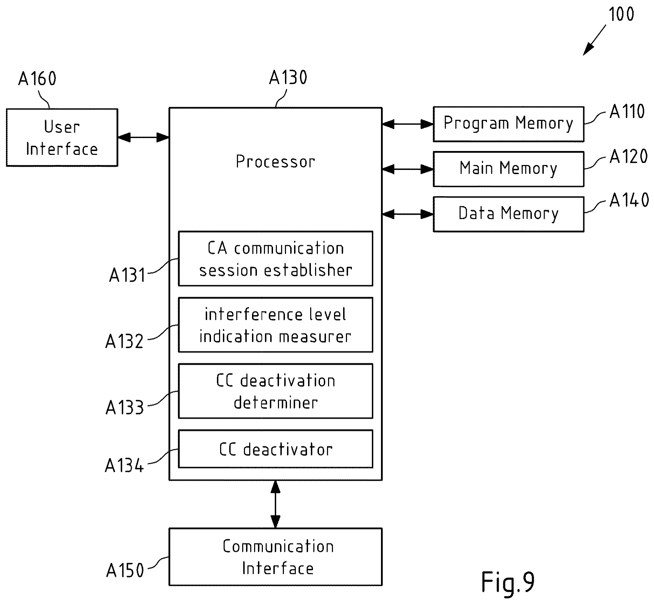

Fig. 9 shows an example block diagram of an apparatus 100 (e.g., performing and/or controlling a method according to the first and/or second example aspect, e.g., a terminal device). The apparatus 100 may perform a method according to the first and/or second example aspect. The apparatus may comprise a user interface A160, a program memory A110, a main memory A120, and a data memory A140. Further, it comprises a processor A130. The apparatus 100 may further comprise functional units CA communication session establisher A131 (e.g., corresponding to method step M101 Fig. 7), interference level indication measurer A132 (e.g., corresponding to method step M102 of Fig. 7), CC deactivation determiner A133 (e.g., corresponding to method step M103 of Fig. 7) and CC deactivator (e.g., corresponding to method step M104 in Fig. 7). A functional unit may for instance correspond to a code block within a memory A110, A120, A140. The functional units A131, A132, A134 may for instance be connected to and/or control the communication interface A150.

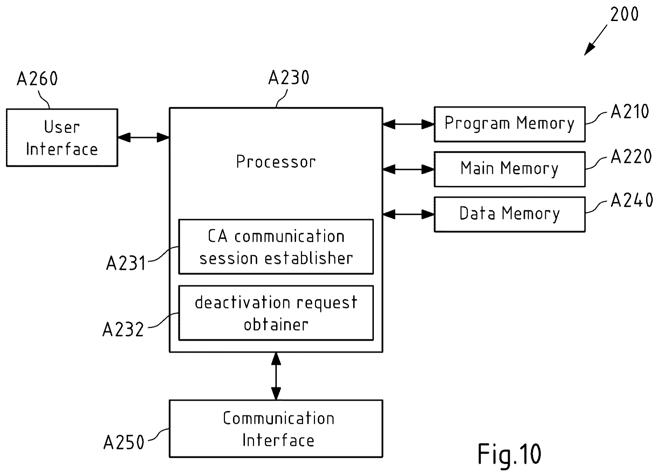

Fig. 10 shows an example block diagram of an apparatus 200 (e.g., performing and/or controlling a method according to the third and/or fourth example aspect, e.g., a network node). The apparatus 200 may perform a method according to the third and/or fourth example aspect. The apparatus 200 may comprise a user interface A260, a program memory A210, a main memory A220, and a data memory A240. Further, it comprises a processor A230. The apparatus 200 may further comprise the functional units CA communication session establisher A231 (e.g., corresponding to method step M201 of Fig. 8) and deactivation request obtainer (e.g., corresponding to method step M202 of Fig. 8). A functional unit may for instance correspond to a code block within a memory A210, A220, A240. The functional units A231, A232 may for instance be connected to and/or control the communication interface A250.

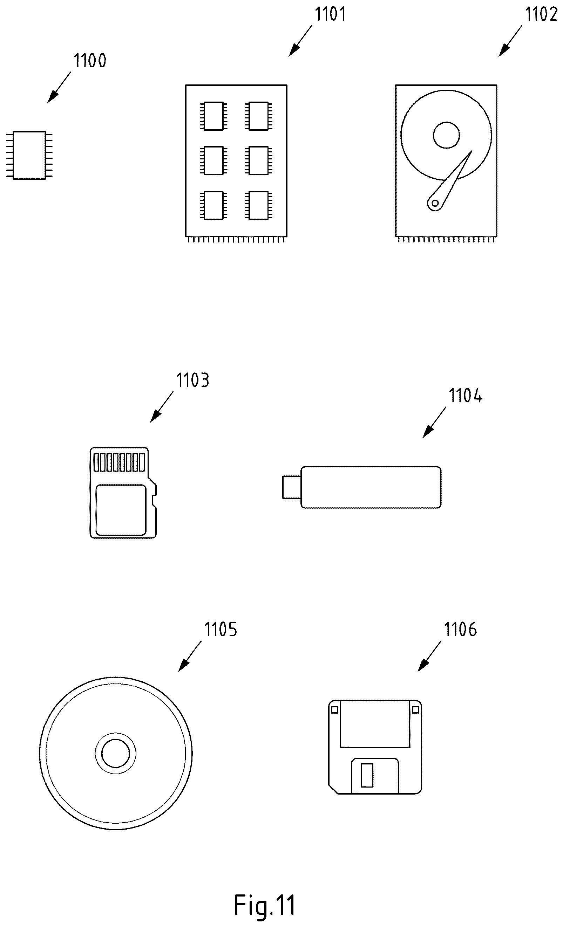

Fig. 11 is a schematic illustration of examples of tangible and non-transitory computer-readable storage media according to the present invention that may for instance be used to implement program and/or main memory A110, A120, A140, A210, A220, A240 of the apparatus 100 and/or 200 of Fig. 9 and 10. Fig. 11 shows a flash memory 1100, which may for instance be soldered or bonded to a printed circuit board, a solid-state drive 1101 comprising a plurality of memory chips (e.g. Flash memory chips), a magnetic hard drive 1102, a Secure Digital (SD) card 1103, a Universal Serial Bus (USB) memory stick 1104, an optical storage medium 1105 (such as for instance a CD-ROM or DVD) and a magnetic storage medium 1106.

Some embodiments comprise:
Embodiment 1: A method, comprising, by a terminal device:
   - establishing a carrier aggregation (CA) communication session with a network node, wherein the CA communication session comprises a first component carrier, CC, and a second CC in a common frequency band distanced from one another by a frequency gap, wherein the first CC and the second CC are utilized using a common radio frequency resource,
   - measuring, using the common radio frequency resource, an interference level indication indicative of an intensity of an interference originating from radio transmissions within the frequency gap, and
   - determining, based on the measured interference level indication, to deactivate the second CC.
Embodiment 2: A method, comprising, by a terminal device:
   - establishing a carrier aggregation (CA) communication session with a network node, wherein the CA communication session comprises a first component carrier, CC, and a second CC in a common frequency band distanced from one another by a frequency gap, wherein the first CC and the second CC are utilized using a common radio frequency resource,
   - measuring, using the common radio frequency resource, an interference level indication indicative of an intensity of interference originating from radio transmissions within the frequency gap,
   - determining, based on the measured interference level indication, to deactivate the second CC,
   - deactivating the second CC, wherein the deactivating comprises ceasing to utilize the second CC.
Embodiment 3: The method according to embodiment 1, further comprising deactivating the second CC.
Embodiment 4: The method according to embodiment 2 or 3, wherein the deactivating is performed independently of an informing the network node of the deactivating.
Embodiment 5: The method according to any of embodiments 1 to 4, wherein the radio transmissions within the frequency gap are at least one of:
   - unusable for a communication session of the terminal device, or
   - at least partially non-orthogonally coded with respect to radio transmissions of the terminal device.
Embodiment 6: The method according to any of embodiments 1 to 5, further comprising
   - selecting the second CC to be deactivated at least partially based on determining that the second CC comprises a secondary component carrier, SCC,.
Embodiment 7: The method according to embodiment 6, wherein selecting the second CC to be deactivated is based on determining that the first CC satisfies at least one of the following conditions:
   - the first CC comprises a primary component carrier, PCC,
   - the first CC comprises a primary secondary component carrier, PSCC,
   - the first CC covers a larger bandwidth compared to the second CC,
   - the first CC exhibits a higher throughput compared to the second CC, or
   - the first CC has a larger signal quality compared to the second CC.
Embodiment 8: The method according to any of embodiments 1 to 7, wherein
   - the determining, based on the measured interference level indication, to deactivate the second CC comprises comparing the interference level indicated by the interference level indication to an interference level threshold.
Embodiment 9: The method according to embodiment 8, further comprising
   - obtaining an indication of the interference level threshold from the network node.
Embodiment 10: The method according to any of embodiments 1 to 9, wherein deactivating the second CC comprises providing a deactivation request to the network node, wherein the deactivation request is at least indicative of the second CC.
Embodiment 11: The method according to embodiment 10, wherein the deactivation request comprises a cause indication indicative in-gap interference as a cause of deactivating the second CC.
Embodiment 12: The method according to any of embodiments 10 or 11, wherein the deactivation request is provided as at least one of
   - a Medium Access Control Element, MAC CE, or
   - a Radio Resource Control, RRC, signaling.
Embodiment 13: The method according to any of embodiments 1 to 12, further comprising
   - obtaining an RRC reconfiguration signaling from the network node.
Embodiment 14: The method according to any of embodiments 1 to 13, further comprising
   - obtaining an RRC reconfiguration signaling from the network node in response to providing the deactivation request.
Embodiment 15: The method according to any of embodiments 1 to 14, further comprising
   - retuning the common radio frequency resource to a center frequency of the first CC.
Embodiment 16: The method according to any of embodiments 1 to 15, further comprising
   - retuning the common radio frequency resource to a center frequency of the first CC.
Embodiment 17: The method according to any of embodiments 1 to 16, further comprising providing a capability indication to the network node indicative of a support of at least one of
   - a CA communication session comprising a first component carrier, CC, and a second CC in a common frequency band,
   - measuring of at least one of
      - a signal quality of a component carrier in a fragmented carrier, or
      - an interference level of an interference originating from radio transmissions within a frequency gap between non-contiguous component carriers in a fragmented carrier,
   - requesting a deactivation of a component carrier,
   - reporting at least one of
      - a cause of deactivating a component carrier, or
      - an indication of an interferer, or
   - at least one filter capability for reducing an interference originating radio transmissions from within a frequency gap between component carriers.
Embodiment 18: The method according to any of embodiments 1 to 17, wherein the communication session comprises at least one further component carrier utilized using a second radio frequency resource.
Embodiment 19: A method, comprising, by a network node:
   - establishing a carrier aggregation (CA) communication session with a terminal device, wherein the CA communication session comprises a first component carrier, CC, and a second CC in a common frequency band distanced from one another by a frequency gap.
Embodiment 20: The method according to embodiment 19, further comprising
   - obtaining a deactivation request from the terminal device, wherein the deactivation request is at least indicative of the second CC.
Embodiment 21: The method according to embodiment 20, wherein the deactivation request comprises a cause indication indicative in-gap interference as a cause of deactivating the second CC.
Embodiment 22: The method according to embodiment 20 or 21, wherein the deactivation request is obtained as at least one of
   - a Medium Access Control Element, MAC CE, or
   - a Radio Resource Control, RRC, signaling.
Embodiment 23: The method according to any of embodiments 20 to 22, further comprising
   - providing an RRC reconfiguration signaling to the terminal device in response to providing the deactivation request.
Embodiment 24: The method according to embodiment 19 or 23, wherein the radio transmissions within the frequency gap are at least one of:
   - unusable for a communication session with the terminal device, or
   - at least partially non-orthogonally coded with respect to radio transmissions of the terminal device.
Embodiment 25: The method according to any of embodiments 19 to 24, further comprising providing an indication of the interference level threshold to the terminal device.
Embodiment 26: The method according to any of embodiments 19 to 25, further comprising
   - providing an RRC reconfiguration signaling to the terminal device.
Embodiment 27: The method according to any of embodiments 19 to 26, further comprising obtaining a capability indication from the terminal device indicative of a support of at least one of
   - a CA communication session comprising a first component carrier, CC, and a second CC in a common frequency band,
   - measuring of at least one of
      - a signal quality of a component carrier in a fragmented carrier, or
      - an interference level of an interference originating from radio transmissions within a frequency gap between non-contiguous component carriers in a fragmented carrier,
   - requesting a deactivation of a component carrier,
   - reporting at least one of
      - a cause of deactivating a component carrier, or
      - an indication of an interferer, or
   - at least one filter capability for reducing an interference originating from radio transmissions within a frequency gap between component carriers.
Embodiment 28: A first apparatus, e.g., a UE, comprising respective means for performing the method of any of Embodiments 1 to 18.
Embodiment 29: An first apparatus, e.g., a UE, comprising at least one processor; and at least one memory storing instructions that, when executed by the at least one processor, cause the apparatus at least to perform and/or control the method according any of embodiments 1 to 18.
Embodiment 30: A second apparatus, e.g., a network node, comprising respective means for performing the method of any of Embodiments 19 to 27.
Embodiment 31: A second apparatus, e.g., a network node, comprising at least one processor; and at least one memory storing instructions that, when executed by the at least one processor, cause the apparatus at least to perform and/or control the method according any of embodiments 19 to 27.
Embodiment 32: A computer program, the computer program when executed by a processor causing an apparatus, e.g. the apparatus according to embodiment 28 or 29, to perform and/or control the actions and/or steps of the method of any of embodiments 1 to 18.
Embodiment 33: A computer program product comprising a computer program according to embodiment 32.
Embodiment 34: A computer program, the computer program when executed by a processor causing an apparatus, e.g. the apparatus according to embodiment 30 or 31, to perform and/or control the actions and/or steps of the method of any of embodiments 19 to 27.
Embodiment 35: A computer program product comprising a computer program according to embodiment 34.
Embodiment 36: A system comprising:
   at least one first apparatus according to any of the embodiments 28 or 29; and
   at least one second apparatus according to any of the embodiments 30 or 31.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (i) to a combination of processor(s) or (ii) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 130, 230 of Figs. 7 and 8, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof" or "at least one of A, B and C" may be understood to be not exhaustive and to include at least the following: (i) A, or (ii) B, or (iii) C, or (iv) A and B, or (v) A and C, or (vi) B and C, or (vii) A and B and C.

It will be understood that the embodiments disclosed herein are only exemplary, and that any feature presented for a particular exemplary embodiment may be used with any aspect of the present disclosure on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

### LIST OF ABBREVIATIONS

- CA: Carrier Aggregation
- CC: Component Carrier
- DL: Downlink
- MO: Measurement Object
- PCC: Primary Component Carrier
- PCell: Primary Cell
- Rx: Receiver
- SCC: Secondary Component Carrier
- SCell: Secondary Cell
- UE: User Equipment

## Claims

1. A terminal device, comprising
- means for establishing a carrier aggregation (CA) communication session with a network node, wherein the CA communication session comprises a first component carrier, CC, and a second CC in a common frequency band distanced from one another by a frequency gap, wherein the first CC and the second CC are utilized using a common radio frequency resource,
- means for measuring, using the common radio frequency resource, an interference level indication indicative of an intensity of an interference originating from radio transmissions within the frequency gap,
- means for determining, based on the measured interference level indication, to deactivate the second CC,
- means for deactivating the second CC, wherein the deactivating comprises ceasing to utilize the second CC.

2. The terminal device according to claim 1, wherein the deactivating is performed independently of an informing the network node of the deactivating.

3. The terminal device according to claim 1 or 2, wherein the radio transmissions within the frequency gap are at least one of:
- unusable for a communication session of the terminal device, or
- at least partially non-orthogonally coded with respect to radio transmissions of the terminal device.

4. The terminal device according to any of claims 1 to 3, further comprising
- means for selecting the second CC to be deactivated at least partially based on determining that the second CC comprises a secondary component carrier, SCC.

5. The terminal device according to claim 4, wherein selecting the second CC to be deactivated is based on determining that the first CC satisfies at least one of the following conditions:
- the first CC comprises a primary component carrier, PCC,
- the first CC comprises a primary secondary component carrier, PSCC,
- the first CC covers a larger bandwidth compared to the second CC,
- the first CC exhibits a higher throughput compared to the second CC, or
- the first CC has a larger signal quality compared to the second CC.

6. The terminal device according to any of claims 1 to 5, wherein
- the determining, based on the measured interference level indication, to deactivate the second CC comprises comparing the interference level indicated by the interference level indication to an interference level threshold.

7. The terminal device according to claim 6, further comprising
- means for obtaining an indication of the interference level threshold from the network node.

8. The terminal device according to any of claims 1 to 7, further comprising
- means for obtaining an RRC reconfiguration signaling from the network node.

9. The terminal device according to any of claims 1 to 8, further comprising
- means for retuning the common radio frequency resource to a center frequency of the first CC.

10. The terminal device according to any of claims 1 to 9, further comprising means for providing a capability indication to the network node indicative of a support of at least one of
- a CA communication session comprising a first component carrier, CC, and a second CC in a common frequency band, or
- measuring of at least one of
- a signal quality of a component carrier in a fragmented carrier, or
- an interference level of an interference originating from radio transmissions within a frequency gap between non-contiguous component carriers in a fragmented carrier.

11. A method comprising
- establishing a carrier aggregation (CA) communication session with a network node, wherein the CA communication session comprises a first component carrier, CC, and a second CC in a common frequency band distanced from one another by a frequency gap, wherein the first CC and the second CC are utilized using a common radio frequency resource,
- measuring, using the common radio frequency resource, an interference level indication indicative of an intensity of an interference originating from radio transmissions within the frequency gap,
- determining, based on the measured interference level indication, to deactivate the second CC,
- deactivating the second CC, wherein the deactivating comprises ceasing to utilize the second CC.

12. The method according to claim 11, wherein the deactivating is performed independently of an informing the network node of the deactivating.

13. The method according to any of claims 11 to 12, further comprising
- selecting the second CC to be deactivated at least partially based on determining that the second CC comprises a secondary component carrier, SCC.
- selecting the second CC to be deactivated at least partially based on determining that the second CC comprises a secondary component carrier, SCC and selecting the second CC to be deactivated is based on determining that the first CC satisfies at least one of the following conditions:
- the first CC comprises a primary component carrier, PCC,
- the first CC comprises a primary secondary component carrier, PSCC,
- the first CC covers a larger bandwidth compared to the second CC,
- the first CC exhibits a higher throughput compared to the second CC, or
- the first CC has a larger signal quality compared to the second CC.

14. The method according to any of claims 11 to 13, wherein
- the determining, based on the measured interference level indication, to deactivate the second CC comprises comparing the interference level indicated by the interference level indication to an interference level threshold.

15. The method according to any of claims 11 to 14, further comprising
- retuning the common radio frequency resource to a center frequency of the first CC.
